# FASCICULE DE BREVET EUROPEEN

(11) **EP 2 115 077 B1**
(45) Date de publication et mention de la délivrance du brevet: **06.04.2016**
(21) Numéro de dépôt: 08709787.9
(22) Date de dépôt: 30.01.2008
(51) Int. Cl.: C09D 7/04, C08K 5/15

(54) **UTILISATION DE DERIVES DE DIOXOLANE DANS DES SYSTEMES DE REVETEMENT ET FORMULATION DE SYSTEME DE REVETEMENT**
VERWENDUNG VON DIOXOLAN-DERIVATEN IN BESCHICHTUNGSSYSTEMEN UND FORMULIERUNG FÜR BESCHICHTUNGSSYSTEME
USE OF DIOXOLANE DERIVATIVES IN COATING SYSTEMS AND COATING SYSTEM FORMULATION

(30) Priorité: 05.02.2007 FR 0700787
(43) Date de publication de la demande: 11.11.2009
(73) Titulaire: Rhodia Poliamida E Especialidades Ltda, Sao Paulo - SP (BR)
(72) Inventeur: DENILSON, José Vicentim, CEP-13050-544 Campinas, SP (BR); PAULO, Roberto Garbelotto, CEP-13088-309 Campinas, SP (BR); AIRES, Iacovone, CEP-01403-010 São Paulo, SP (BR)
(74) Mandataire: Ridray, Annabelle
(86) Numéro de dépôt international: PCT/IB2008/000286
(87) Numéro de publication internationale: WO 2008/096255

(56) Documents cités:
- JP-A- 4 325 539
- JP-A- 6 313 100
- JP-A- 2003 183 569
- US-A- 3 055 766

## Description

La présente invention concerne l'utilisation de dérivés de dioxolane comme agent filmogène, comme agent de coalescence et/ou comme agent de retard de séchage dans la formulation de systèmes de revêtement, tels que peintures et vernis, particulièrement peintures industrielles, graphiques et architecturales.

Dans la suite de ce texte, l'on entend par peintures architecturales, les peintures à base d'eau, et par peintures industrielles par exemple sur meubles, automobile d'origine et retouches, celles à base de solvant, uniquement pour des raisons de simplification de l'exposition, sans que cela implique la moindre limitation de la portée de la présente invention.

Les peintures architecturales sont appréciées pour leur qualité et leur bon aspect après l'application, sur le plan de la finition, du recouvrement et de la durabilité. Ces propriétés résultent de la qualité des composants de la peinture tels que les épaississants, les pigments, les tensioactifs. Dans les peintures architecturales, on peut citer comme composants importants pour obtenir une bonne qualité, les agents de coalescence, qui procurent une uniformité des contacts entre les particules, conférant au film un bon aspect quant à la brillance et à la durabilité, en fonction de la résistance à l'abrasion. De même, pour assurer une meilleure application, la peinture industrielle doit comporter un équilibre dans la composition du système solvant, pour que le temps de séchage de la peinture soit approprié, évitant la présence d'imperfections indésirables dans la finition.

Certaines tentatives pour améliorer la qualité des peintures sont déjà connues, dont :

Le brevet JP 62241977 décrit l'application de solvants dérivés de glycérine comme solvant pour encres de stylo procurant une bonne viscosité, permettant notamment, d'obtenir une écriture fine sans taches.

Le brevet JP 62156983 décrit l'application de solvants dérivés de la condensation de glycérine avec un aldéhyde ou l'acétone, sur les surfaces de matériaux pour impression, afin d'obtenir une bonne absorption de la peinture, et des images nettes sans taches.

Le brevet JP 62084171 décrit l'utilisation de solvants dérivés de la condensation de glycérine avec des aldéhydes ou des cétones dans la fabrication de peintures graphiques de séchage plus rapide et sans taches.

Le brevet JP 01013080 concerne l'utilisation de solvants polyoxyalkylènes comme solvants et émulsifiants de peintures.

Le brevet JP 06073318 mentionne l'utilisation de mélange glycérol/acétone comme solvant dans la fabrication de décapants de peinture.

Par ailleurs, il est connu de JP06313100 d'utiliser un solvant comprenant du 1,3-dioxolane dans des compositions à base de polycarbonate. Des dioxolanes, notamment insaturés, ont aussi été décrits dans JP04325539, JP2003-183569 et US3055766 comme monomères ou intermédiaires de monomètres constituant le film de peinture.

La présente invention se différencie de l'art intérieur par l'utilisation selon la revendication 1 de dérivés de dioxolanes de formule (I) comme agents filmogènes, c'est-à-dire comme agents de coalescence, ou agents de retard de séchage dans les systèmes ou formulations de peintures, notamment industrielles, architecturales ou graphiques.

Le terme agent filmogène est utilisé de manière générique et désigne tout additif qui permet de modifier la coalescence d'un système ou le retard au séchage, par exemple.

Un avantage important réside dans le fait qu'il est possible de maintenir la qualité du système de peinture en utilisant une plus faible quantité d'additifs par rapport aux quantités utilisées pour d'autres additifs connus de l'état de la technique.

À la différence de l'état de la technique, la présente invention utilise un ou plusieurs dérivés de dioxolane comme agent filmogène, c'est-à-dire, aussi bien en tant qu'agent de coalescence intervenant comme auxiliaire de formation de films dans les systèmes à base aqueuse, que comme agent de retard de temps de séchage dans les systèmes à base de solvants, dans des systèmes de revêtement de substrats, particulièrement dans les peintures utilisées dans les domaines industriels, graphiques ou architecturaux.

L'on entend par agent filmogène celui qui, contenu dans la formulation d'un revêtement, favorise la formation du film lors de l'application sur un substrat.

Comme il est connu de l'homme du métier, la caractéristique obtenue lorsque le temps de séchage d'un film est retardé, est de permettre un meilleur étalement de la peinture et une accentuation de la brillance de la peinture.

Il est également connu de l'homme du métier que les substances coalescents favorisent le contact entre les particules, facilitant et améliorant la formation du film, permettant ainsi d'améliorer l'aspect et la durabilité du film appliqué, par exemple peinture ou vernis. Ces améliorations sont en relation et une conséquence de la diminution de la température de transition vitreuse et de la température minimale de formation du film (TMFF) générées par l'agent de coalescence.

Selon la présente invention, l'on entend par substances coalescentes celles qui sont utilisées comme plastifiant intervenant comme auxiliaire dans la formation de films et, par substances de retard celles qui modifient le temps de séchage, suite à l'application de formulations de revêtement sur des substrats.

Les dérivés de dioxolane utilisés comme agents filmogènes selon la présente invention sont ceux de la formule (I) ci-dessous : 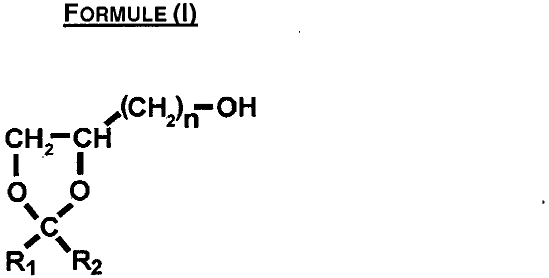 dans laquelle : R1 et R2 identiques ou différents, représentent l'hydrogène, un groupe ou radical choisi dans le groupe comprenant au moins les radicaux alkyle, alkényle ou phényle, et n est un nombre entier égal à 1, 2, 3, 4 ou 5.

En particulier, R1 et R2 sont des radicaux choisis dans le groupe comprenant le radical méthyle, éthyle, n-propyle, isopropyle ou isobutyle.

De préférence, n est égal à 1 ou 2.

Dans un mode de réalisation préféré de l'invention, le dérivé de dioxolane de formule (I) de la présente invention est le 2,2-diméthyl-1,3-dioxolane-4-méthanol, également connu sous le nom de solkétal. Ce dérivé est particulièrement intéressant comme agent de coalescence pour formulation de revêtement à base aqueuse.

Dans un autre mode de réalisation préféré de l'invention, le dérivé de dioxolane de formule (I) de la présente invention est le 2,2-diisobutyle-1,3-dioxolane-4-méthanol, également connu sous l'acronyme IIPG, du synonyme 1-isobutyle-isopropylidène glycérol. Ce dérivé est particulièrement intéressant comme agent de retard de temps de séchage pour formulation de revêtement à base de solvants.

La présente invention, a aussi pour objet des formulations pour système de revêtement selon la revendication 6 comprenant comme agent filmogène au moins un dérivé dioxolane de formule (I) Ces formulations peuvent notamment être à base aqueuse ou à base de solvant, non aqueux.

Selon la présente invention, les quantités de dérivé de dioxolane de l'invention qui sont ajoutées dans des formulations de peintures pour obtenir l'effet d'amélioration recherché sont nettement inférieures aux quantités utilisées avec d'autres additifs connus. Ainsi, la quantité utilisée avec le composé de l'invention peut être égale à 10% de la quantité utilisé avec les additifs de l'art antérieur, comme par exemple l'acétate d'éthylglycol (AEG), l'acétate de butylglycol (ABG) et l'acétate de propylèneglycol monométhyl éther (PMA), pour une performance équivalente. En outre, l'on obtient un meilleur compromis coût/bénéfice, les formulations utilisant le dérivé de dioxolane de la présente invention s'avérant plus économique.

Comme systèmes de revêtement à base de solvants convenables pour l'invention et dont les propriétés sont améliorées par l'addition d'un dérivé de dioxolane, conformément à la présente invention, sont les systèmes à base de nitrocellulose, polyester, acétate butyrate de cellulose (CAB), systèmes polyuréthaniques, époxy, acryliques, mélaminiques, ou phénolyques.

Parmi les revêtements architecturaux à base aqueuse convenables pour l'invention, on peut citer les systèmes vinyliques, vinyl-acryliques, acryliques purs et styrène acryliques.

La quantité d'un ou plusieurs dérivés de dioxolane utilisée dans une formulation de revêtement est comprise, avantageusement, entre environ 0,1% et environ 10% en poids, par rapport au poids total de la peinture, plus particulièrement entre environ 0,1% et environ 5%. Dans le système architectural, la quantité de dérivé de dioxolane ajoutée est comprise entre 0,1% et 5 % de la formulation de peinture.

D'autres avantages, détails de l'invention apparaîtront plus clairement au vu des exemples illustratifs de réalisation de la présente invention donnés ci-dessous, sans pour autant représenter une limitation autre que celles qui sont contenues dans les revendications ci-jointes.

### EXEMPLES

### PEINTURES INDUSTRIELLES

Huit formulations ont été préparées selon le tableau I ci-dessous. II s'agit d'un vernis polyuréthanique, typiquement utilisé comme revêtement pour des substrats métalliques et en bois, contenant 65% d'un mélange isocyanate + polyol, et 35% d'un ensemble de solvants. Sur le tableau, AEG signifie acétate d'éthylglycol, ABG signifie acétate de butylglycol et PMA signifie acétate de propylène glycol mono méthyl éther. Le solkétal est le dérivé de dioxolane utilisé.

**TABLEAU I**

| COMPARAISON DE FORMULATIONS DE L'ETAT DE LA TECHNIQUE (F1, F3, F5) AVEC DES FORMULATIONS SELON LA PRESENTE INVENTION (F2, F4 ET F6) | | | | | | |
|---|---|---|---|---|---|---|
| **Solvants (% m/m)** | **F1 AEG** | **F2 Solketal** | **F3 PMA** | **F4 Solketal** | **F5 ABG** | **F6 solketal** |
| Acétate d'Ethyle | 9,1 | 10,6 | 20,8 | 19,4 | 9,8 | 9,6 |
| Toluol | 22,8 | 22,8 | 9,8 | - | - | - |
| Acétate de Butyle | 18,9 | 20,8 | - | 24,1 | 26,0 | 26,0 |
| Xylol | 6,5 | 6,5 | 13,0 | 14,3 | 19,5 | 19,5 |
| AB 9 | 3,9 | 3,9 | 3,9 | 6,5 | 7,8 | 8,5 |
| PMA | - | - | 17,6 | - | - | - |
| Acétate d'Ethylglycol | 3,9 | - | - | - | - | - |
| Acétate de Butylglycol | - | - | - | - | 2 | - |
| Solkétal | | 0,5 | | 0,7 | - | 1,4 |
| Total solvants | 65,0 | 65,0 | 65,0 | 65,0 | 65,0 | 65,0 |
| Solides (isocyanate+polyol) % | 35,0 | 35,0 | 35,0 | 35,0 | 35,0 | 35,0 |

Le terme AB9 signifie un composé alkylbenzène comprenant un substituant alkyl comprenant 9 atomes de carbone et commercialisé par la société SHELL sous la dénomination IR9. Les composés Toluol et Xylol sont des hydrocarbures commercialisés par la société PETROBRAS.

Les aspects suivants ont été testés :

### a - détermination du pourcentage de NCO libre dans temps

Ce test est connu de l'homme du métier et permet de déterminer si les fonctions NCO réagissent avec les fonctions OH du solvant. Cette détermination est réalisée par la technique du rétro-titrage, consistant à ajouter une certaine quantité d'amine dans la peinture. Cette amine réagit avec les fonctions NCO pour donner une fonction urée, l'amine non transformée est dosée par neutralisation avec un acide (acide chlorhydrique). Le % NCO est égal à la quantité d'amine ajoutée diminuée par la quantité dosée d'amine excédentaire

### b - Temps de séchage du film sur substrat métallique :

Ce test permet d'évaluer le séchage d'un système, les résultats étant présentés en fonction du temps. Ces résultats sont :
- Séchage hors poussière - Moment où la surface ne retient plus de poussière.
- Séchage hors toucher - Moment où la surface soumise au toucher ne présente plus d'adhérence.
- Séchage manipulation - Moment où la surface soumise a une pression supérieure au toucher ne présente plus de déformations.

### c - brillance :

Le test permet de définir le degré auquel la finition de la surface se rapproche d'un idéal de brillance spéculaire théorique, qui peut être considéré comme un miroir parfait, basé sur une valeur arbitraire de 100.

### d - résistance mécanique et résistance chimique :

Cette mesure définit le degré de résistance de la surface après finition aux mouvements de compression, exprimés en cycles, en utilisant dans l'essai de résistance mécanique une masse à polir et dans l'essai de résistance chimique le solvant méthyl éthyl cétone (MEK).

### e - adhésion par coupe croisée, ou par rayure :

Ces essais sont effectués pour vérifier l'ancrage entre les couches de film, et sont réalisés par un dispositif traversant doté de plusieurs lames à coupe parallèle fixées à un manche. Après séchage complet des surfaces, une série de coupes est effectuée de manière à faire des intersections à 90°, formant un quadrillé. Ensuite, sur les zones rayées, on applique un ruban adhésif et on tire rapidement. On vérifie si le ruban enlève des carreaux de la surface ou revêtement.

### f - dureté du film formé:

Cette mesure est réalisée en utilisant un ensemble de crayons de graphite groupés selon une dureté croissante de 8B (plus mou) à 10H (plus dur). On raye le film formé avec cet ensemble de crayons et on vérifie quelle est la dureté du crayon qui raye le film.

### g - flexibilité par pliage sur mandrin conique :

Cet essai est effectué sur un équipement dénommé mandrin conique qui comporte un levier sur l'étendue totale d'un cylindre conique. L'éprouvette est d'abord attachée à une extrémité de l'équipement, puis pliée. Cet essai permet d'évaluer le comportement du revêtement sur le plan de la flexibilité.

### h - viscosité Brookfield de la formulation :

Cet essai est réalisé sur un viscosimètre Brookfield LV DV II. La viscosité est un paramètre important aussi bien pour l'application que pour le stockage du produit.

Les résultats de ces tests et mesures sont indiqués et illustrés dans les tableaux ci-dessous et les figures annexées dans lesquelles :

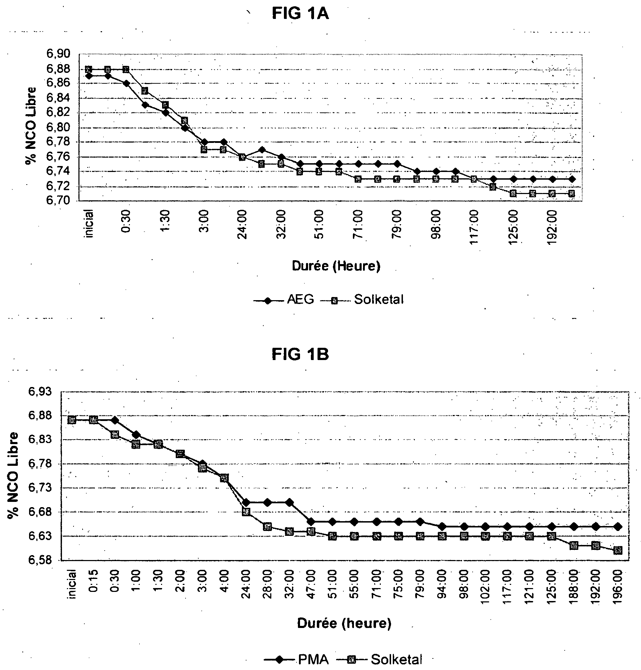

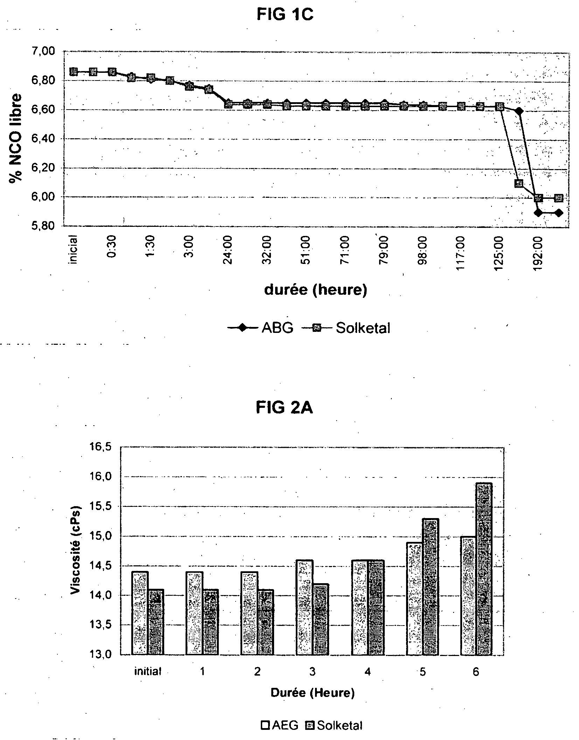

Les figures 1A à 1C représentent la consommation de fonction NCO par les fonctions hydroxyles du solvant pour
   o les systèmes F1/F2 (figure 1A)
   o les systèmes F3/F4 (figure 1 B), et
   o les systèmes F5/F6 (figure 1C) ;

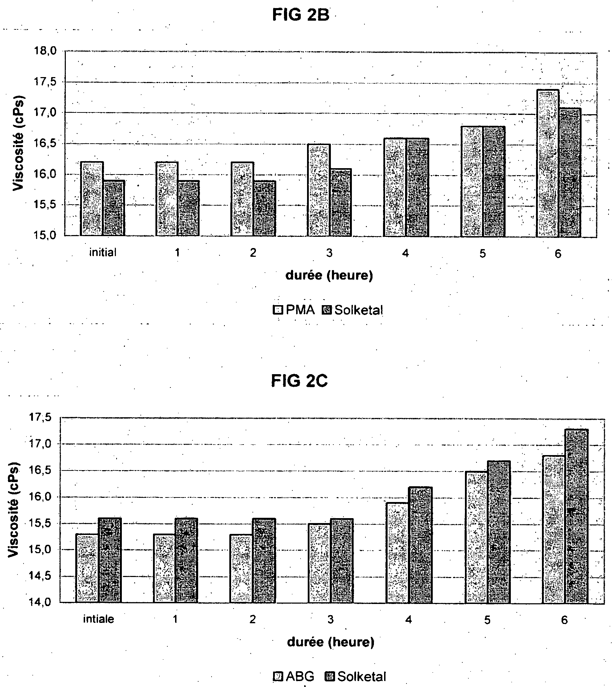

Les figures 2A à 2C représentent l'évolution comparée de la viscosité Brookfield des formulations testées du tableau 1 pour :
   o les systèmes F1/F2 (figure 2A)
   o les systèmes F3/F4 (figure 2B), et
   o les systèmes F5/F6 (figure 2C) ;

La comparaison des temps de séchage des différents systèmes testés est illustrée dans les tableaux 2A, 2B et 2C suivants :

**TABLEAU 2A**

| RESULTATS DE TEMPS DE SECHAGE POUR LE SYSTEME AEG | | | |
|---|---|---|---|
| **Formule** | **Poudre** | **Toucher** | **Manipulation** |
| F1 - AEG | 7 min | 4 :20 heures | >8 heures |
| F2 - solkétal | 7 min | 4 :20 heures | >8 heures |

**TABLEAU 2B**

| RESULTATS DE TEMPS DE SECHAGE POUR LE SYSTEME PMA | | | |
|---|---|---|---|
| **Formule** | **Poudre** | **Toucher** | **Manipulation** |
| F3 - PMA | 6 min | 4 :00 heures | >8 heures |
| F4 - solkétal | 6 min | 4 :00 heures | >8 heures |

**TABLEAU 2C**

| RESULTATS DE TEMPS DE SECHAGE POUR LE SYSTEME ABG | | | |
|---|---|---|---|
| **Formule** | **Poudre** | **Toucher** | **Manipulation** |
| F5 - ABG | 7 min | 4 :30 heures | >8 heures |
| F6 - solkétal | 7 min | 4 :30 heures | >8 heures |

Les tableaux 3A, 3B et 3C rassemblent les résultats obtenus pour la mesure de la brillance de chacun des systèmes testés.

**TABLEAU 3A**

| RESULTAT DES MESURES DE BRILLANCE POUR LE SYSTEME AEG | | | |
|---|---|---|---|
| **Formule** | **Angle** | | |
| | **20°** | **60°** | **85°** |
| F1 - AEG | 77,9 | 92,5 | 96,4 |
| F2 - solkétal | 75,8 | 92,4 | 95,3 |

**TABLEAU 3B**

| RESULTAT DES MESURES DE BRILLANCE POUR LE SYSTEME PMA | | | |
|---|---|---|---|
| **Formule** | **Angle** | | |
| | **20°** | **60°** | **85°** |
| F3 - PMA | 57,1 | 89,8 | 86,8 |
| F4 - solkétal | 62,5 | 90,8 | 93,0 |

**TABLEAU 3C**

| RESULTAT DES MESURES DE BRILLANCE POUR LE SYSTEME ABG | | | |
|---|---|---|---|
| **Formule** | **Angle** | | |
| | **20°** | **60°** | **85°** |
| F5 - ABG | 72,1 | 89,4 | 88,0 |
| F6 - solkétal | 71,9 | 90,9 | 91,9 |

Les tableaux 4A, 4B et 4C concernent les résultats de résistance mécanique et chimique des films obtenus avec les formulations testées.

**TABLEAU 4A**

| RESULTATS DES TESTS DE RESISTANCE MECANIQUE ET DE RESISTANCE CHIMIQUE POUR LE SYSTEME AEG | | |
|---|---|---|
| **Formule** | **Résistance Mécanique** | **Résistance Chimique** |
| F1 - AEG | Similaire | Similaire |
| F2 - solkétal | | |

**TABLEAU 4B**

| RESULTATS DES TEST DE RESISTANCE MECANIQUE ET DE RESISTANCE CHIMIQUE POUR LE SYSTEME PMA | | |
|---|---|---|
| **Formule** | **Résistance Mécanique** | **Résistance Chimique** |
| F3 - PMA | Similaire | Similaire |
| F4 - solkétal | | |

**TABLEAU 4C**

| RESULTATS DES TEST DE RESISTANCE MECANIQUE ET DE RESISTANCE CHIMIQUE POUR LE SYSTEME ABG | | |
|---|---|---|
| **Formule** | **Résistance Mécanique** | **Résistance Chimique** |
| F5 - ABG | Similaire | Similaire |
| F6 - solkétal | | |

Les tableaux 5A, 5B et 5C concernent les résultats du test d'adhésion par rayure des formules testées.

**TABLEAU 5A**

| RESULTATS DE L'ADHESION PAR RAYURE POUR LE SYSTEME AEG | |
|---|---|
| **Formule** | **Adhésion par rayure** |
| F1 - AEG | Similaire |
| F2 - solkétal | |

**TABLEAU 5B**

| RESULTATS DE L'ADHESION PAR RAYURE POUR LE SYSTEME PMA | |
|---|---|
| **Formule** | **Adhésion par rayure** |
| F3 - PMA | Similaire |
| F4 - solkétal | |

**TABLEAU 5C**

| RESULTATS DE L'ADHESION PAR RAYURE POUR LE SYSTEME ABG | |
|---|---|
| **Formule** | **Adhésion par rayure** |
| F5 - ABG | Similaire |
| F6 - solkétal | |

Les tableaux 6A, 6B et 6C font mention aux résultats de dureté du film obtenus pour les formulations testées.

**TABLEAU 6A**

| RESULTATS DE DURETE DU FILM POUR LE SYSTEME AEG | | |
|---|---|---|
| **Formule** | **F1 - AEG** | **F2** - **solkétal** |
| Résistance jusqu'à Rayure | 3B | 3B |
| | 2B | 2B |

**TABLEAU 6B**

| RESULTATS DE DURETE DU FILM POUR LE SYSTEME PMA | | |
|---|---|---|
| **Formule** | **F3** - **PMA** | **F4 - solkétal** |
| Résistance jusqu'à Rayure | 3B | 3B |
| | 2B | 2B |

**TABLEAU 6C**

| RESULTATS DE DURETE DU FILM POUR LE SYSTEME ABG | | |
|---|---|---|
| **Formule** | **F5 - ABG** | **F6** - **solkétal** |
| Résistance jusqu'à Rayure | 3B | 3B |
| | 2B | 2B |

Les tableaux 7A, 7B et 7C présentent les résultats de l'essai de flexibilité par pliage pour les formulations testées.

**TABLEAU 7A**

| RESULTATS FLEXIBILITE PAR PLIAGE POUR LE SYSTEME AEG | |
|---|---|
| **Formule** | **Flexibilité** |
| F1 - AEG | Similaire |
| F2 - solkétal | |

**TABLEAU 7B**

| RESULTATS FLEXIBILITE PAR PLIAGE POUR LE SYSTEME PMA | |
|---|---|
| **Formule** | **Flexibilité** |
| F3 - PMA | Similaire |
| F4 - solkétal | |

**TABLEAU 7C**

| RESULTATS FLEXIBILITE PAR PLIAGE POUR LE SYSTEME ABG | |
|---|---|
| **Formule** | **Flexibilité** |
| F5 - ABG | Similaire |
| F6 - solkétal | |

Les résultats ci-dessus montrent clairement que les formules conformes à la présente invention qui contiennent des quantités moins importantes d'additifs filmogènes (solkétal) par rapport à un solvant principal dans les formules de l'état de la technique, présentent des performances et propriétés équivalentes quant aux divers aspects testés, en particulier quand les solvants de l'état de la technique sont AEG, PMA et ABG.

### PEINTURES ARCHITECTURALES

Cette section d'exemples vise à comparer, dans les peintures architecturales, l'utilisation des coalescents TEXANOL (monobutyrate de 2,2,4-triméthyl-1,3-pentanediol, CAS n° 25265-77-4) commercialisé par la société Eastman Chemical Company), connu dans l'état de la technique, et IIPG (CAS n° 5694-81-5), selon la présente invention.

Les rubriques ci-après illustrent :
a) Trois systèmes de résines, couramment commercialisés sur le marché de peintures - base acrylique pur, styrène acrylique ou vinyl acrylique - et leurs procédés respectifs de polymérisation. Ces procédés de polymérisation, ainsi que le matériel employé à cet effet, sont usuels, connus de l'homme du métier. Un ensemble d'équipements approprié est composé pour l'essentiel d'un réacteur de polymérisation, doté d'un système de chauffage / refroidissement et des contrôles respectifs, d'un condenseur, d'un réservoir pour les différentes matières premières et les doseurs respectifs, de pompes, et d'un système d'inertisation.
b) Etant donné que les bases de peintures contenant des coalescents sont des produits existant sur le marché, l'on propose trois bases de peinture, contenant les systèmes susmentionnés, en deux séries. Dans une première série chacun des systèmes de résine reçoit l'ajout de 2% en poids de coalescent TEXANOL, et dans une deuxième série, chacun des trois systèmes de résine reçoit l'ajout de 2% en poids de coalescent IIPG.
c) On procède a des tests comparatifs de chacune de ces 6 bases de peintures ayant reçu l'ajout de coalescent : stabilité de pH, stabilité de viscosité, variation de TMFF en fonction de la concentration de coalescents.
d) Une série de trois formulations de peintures architecturales, choisies parmi les bases ci-dessus, contenant l'addition de 2% en poids de TEXANOL - en tant que produits de l'état de la technique, et pour permettre une comparaison, une autre série de trois formulations de peintures architecturales contenant l'addition de 2% en poids de IIPG - en tant que produits formulés selon les enseignements de la présente invention.
e) On procède a des tests comparatifs des 6 formulations : stabilité de pH, stabilité de viscosité, résistance à l'abrasion et variation de brillance.

**Tableau II**

| FORMULATION DE SYSTEME DE RESINE BASE D'ACRYLIQUE PURE | |
|---|---|
| **COMPOSANT** | **% EN POIDS** |
| *Action : CHARGE* | |
| Eau | 14,56 |
| Sel d'ammonium d'éthoxylate de nonylphénol sulphaté CAS n° 68649-55-8 (1) | 0,66 |
| Sodium allyoxy hydroxypropyl sulfonate - CAS n° 52556-42-0 (2) | 0,41 |
| *Action : PRE-MIX - 45 MIN - 180RPM* | |
| Sel d'ammonium d'éthoxilate de nonylphénol sulphaté - CAS n° 68649-55-8 (1) | 3,31 |
| Alliloxy hydroxypropyl sulphonate de sodium - CAS n° 52556-42-0 (2) | 0,35 |
| Acide acrylique - CAS n° 79-10-7 | 0,98 |
| Acrylate de n-butyle - CAS n° 141-32-2 | 22,11 |
| Méthacrylate de méthyle - CAS n° 80-62-6 | 25,95 |
| Eau | 17,58 |
| *Action : 1ère ADDITION DE CATALYSEUR* | |
| Eau | 11,16 |
| Persulfate d'ammonium - CAS n° 7727-54-0 | 0,36 |
| *Action : 2ème ADDITION DE CATALYSEUR* | |
| Eau | 0,48 |
| Persulfate d'ammonium - CAS n° 7727-54-0 | 0,10 |
| *Action : AJUSTEMENT DE pH* | |
| Hydroxyde d'ammonium 25% - CAS n° 1336-21-6 | 0,98 |
| Eau | 0,98 |

On procède à la polymérisation suivante :
1. Placer dans le réacteur les réactifs de la charge.
2. Procéder à l'agitation du réacteur, sous inertisation, après la mise en service du condenseur.
3. Chauffer à une température appropriée, par exemple 80°C.
4. Ajouter les monomères en même temps que l'eau et les tensioactifs, pour obtenir la pré-émulsion (pré mix)
5. Ajouter lentement le catalyseur 1
7. Ajouter lentement le catalyseur 2
8. Finalement, ajuster le pH entre 8,7 et 9,2.

Dans les Figures, on indique sous les références SR1 et SR2 les systèmes de résine ici dénommée acrylique pure selon le Tableau II ci-dessus, contenant respectivement 2% en poids de Texanol, et 2% en poids de IIPG.

**TABLEAU III**

| FORMULATION DE SYSTEME DE RESINE BASE DE STYRENE-ACRYLIQUE | |
|---|---|
| **COMPOSANT** | **% EN POIDS** |
| *Action : CHARGE* | |
| Eau | 32,10 |
| Sel d'ammonium d'éthoxylate de nonylphénol sulphaté - CAS n° 68649-55-8 (1) | 0,64 |
| Alliloxy hydroxypropyl sulphonate de sodium - CAS n° 52556-42-0 (2) | 0,14 |
| Polyoxyethylene(9)nonylphenyl éther, branché CAS 68412-54-4 (3) | 0,44 |
| TDDM (tert-dodécyl mercaptan) CAS n° 25103-58-6 | 0,21 |
| Eau | 0,10 |
| Acide acétique - CAS n° 64-19-7 | 0,02 |
| Eau | 9,42 |
| *Action : PRE-MIX - 45 MIN - 180 RPM* | |
| Sel d'ammonium d'éthoxylate de nonylphénol sulphaté CAS n° 68649-55-8 (1) | 1,68 |
| Polyoxyéthylène(9)nonylphényl éther, branché CAS 68412-54-4 (3) | 0,71 |
| Acrylamide - CAS n° 79-06-1 | 1,413z |
| Eau | 0,79 |
| Persulfate d'ammonium - CAS n° 7727-54-0 | 0,31 |
| Eau | 2,62 |
| Acide méthacrytique - CAS n° 79-41-4 | 1,47 |
| Acrylate de n-butyle - CAS n° 141-32-2 | 23,33 |
| Styrène - CAS n° 100-42-5 | 21,76 |
| *Action : addition de solution catalytique* | |
| Persulfate d'ammonium - CAS n° 7727-54-0 | 0,79 |
| Eau | 0,18 |
| *Action : Ajustement de pH* | |
| Hydroxyde d'ammonium 25% - CAS n° 1336-21-6 | 0,94 |
| Eau | 0,94 |

### PROCEDE DE POLYMERISATION

1. Placer dans le réacteur les réactifs de la charge.
2. Procéder à l'agitation du réacteur, sous inertisation, après la mise en service du condenseur.
3. Chauffer à une température appropriée, par exemple 80°C.
4. Ajouter les monomères en même temps que l'eau et les tensioactifs, pour obtenir une pré-émulsion (pré-mix).
5. Ajouter lentement la solution catalytique
6. Finalement, ajuster le pH entre 8,5 et 9.

Dans les Figures, on indique sous les références SR3 et SR4 les systèmes de résine styrène acrylique selon le Tableau III ci-dessus, contenant respectivement 2% en poids de Texanol, et 2% en poids de IIPG.

**TABLEAU IV**

| FORMULATION DE SYSTEME DE RESINE BASE DE VINYL ACRYLIQUE | |
|---|---|
| **COMPOSANT** | **% EN POIDS** |
| *Action : CHARGE* | |
| Eau | 32,29 |
| Sel d'ammonium d'éthoxylate de nonylphénol sulphaté - CAS n° 68649-55-8 (1) | 3,52 |
| Sodium allyoxy hydroxypropyl sulfonate - CAS n° 52556-42-0 (2) | 1,30 |
| Polyoxyéthylène(9)nonylphenyl éther, branché CAS 68412-54-4 (3) | 1,15 |
| Acétate de sodium (anhydre CAS n° 127-09-3) | 0,15 |
| Persulfate d'ammoniaque - CAS n° 7727-54-0 | 0,06 |
| Bicarbonate de sodium - CAS n° 144-55-8 | 0,09 |
| *Action : Addition de monomères* | |
| Acétate de vinyle - CAS n° 108-05-4 | 36,50 |
| Acrylate de butyle - CAS n° 141-32-2 | 15,64 |
| *Action : addition de solution catalytique* | |
| Eau | 6,92 |
| Bicarbonate de sodium - CAS n° 144-55-8 | 0,09 |
| Persulfate d'ammonium - CAS n° 7727-54-0 | 0,22 |
| *Action : addition de solution d'oxyréduction* | |
| Eau | 1,44 |
| Tert-butyl hydropéroxyde 70 % - CAS n° 75-91-2 (4) | 0,04 |
| *Action : addition de solution d'oxyréduction* | |
| Eau | 00,58 |
| Formaldéhyde sulfoxylate de sodium 99% - CAS n° 149-44-0 (5) | 0,02 |

### PROCEDE DE POLYMERISATION

1. Placer dans le réacteur os réactifs de la charge.
2. Procéder à l'agitation du réacteur, sous inertisation, après la mise en service du condenseur.
3. Chauffer a température appropriée, par exemple 80°C.
4. Ajouter les monomères
5. Ajouter lentement la solution catalytique
6. Ajouter la solution d'oxyréduction

Dans les Figures, on indique sous les références SR5 et SR6 les systèmes de résine vinyl acrylique selon le Tableau III ci-dessus, contenant respectivement 2% en poids de Texanol, et 2% en poids de IIPG.

**TABLEAU V**

| BASE DE FORMULATION PEINTURE SEMI-BRILLANCE PVC (Pigment Volume Content) = 26 | | |
|---|---|---|
| **COMPOSANT** | **FONCTION** | **% EN MASSE** |
| Eau | Solvant | 26,90 |
| Hexaméthaphosphate de sodium CAS n° 10124-56-8 | Dispersant ionique | 0,10 |
| Polyacrylate à faible poids moléculaire neutralisé (6) CAS n° 9003-04-7 | Dispersant polyélectrolyte | 0,20 |
| Polyoxyéthylène(9)nonylphenyl éther, branché CAS 68412-54-4 (3) | Humectant | 0,20 |
| Paraffine lourde dégraissée par solvant, Distillée de pétrole CAS n° 64742-65-0 (7) | Antimoussant | 0,20 |
| Dioxyde de titane CAS n° 13463-67-7 | Pigment | 14,00 |
| Carbonate de calcium précipité CAS n° 471-34-1 | Charge | 3,00 |
| Carbonate de calcium naturel CAS n° 1317-65-3 | Charge | 7,00 |
| Agalmatolyte CAS n° 12284-46-7 | Charge | 1,00 |
| Hydroxyde d'ammoniaque CAS n° 1336-21-6 | Alcalinisant | 0,20 |
| 1,2-benziso-3-thiazolinone CAS n° 2634-33-5 (8) | Biocide | 0,10 |
| Oxyde de polyéthylène uréthane hydrophobiquement modifié, non ionique (9) | Epaississant à faible cisaillement | 1,70 |
| Émulsion d'épaississant anionique hydrophobiquement modifié (10) | Epaississant à fort cisaillement | 0,40 |

Dans les Figures, on indique sous les références F1 et F2, qui sont des formulations de peintures contenant un rapport de 45/55 en poids du système de résine acrylique pure selon le Tableau II ci-dessus, et de la base de formulation de Peinture semi brillance selon le Tableau V ci-dessus, contenant respectivement une addition de 2% en poids de Texanol, et une addition de 2% en poids de IIPG.

De même, l'on indique sous les références F3 et F4, qui sont des formulations de peintures contenant un rapport de 45/55 en poids du système de résine styrène acrylique selon le Tableau III ci-dessus, et de la base de formulation de Peinture semi brillance selon le Tableau V ci-dessus, contenant respectivement une addition de 2% en poids de Texanol, et une addition de 2% en poids de IIPG.

**TABLEAU VI**

| BASE DE FORMULATION PEINTURE MATE PVC (Pigment Volume Content) = 61 | | |
|---|---|---|
| **COMPOSANT** | **FONCTION** | **% EN MASSE** |
| Eau | Solvant | 38,95 |
| Hexaméthaphosphate de sodium CAS n° 10124-56-8 | Dispersant ionique | 0,05 |
| Polyacrylate à faible poids moléculaire neutralisé (6) CAS n° 9003-04-7 | Dispersant polyélectrolyte | 0,40 |
| Polyoxyéthylène(9)nonylphenyl éther, branché CAS 68412-54-4 (3) | Humectant | 0,10 |
| Nitrite de sodium CAS n° 7632-00-0 | Anticorrosif | 0,05 |
| Paraffine lourde dégraissée par solvant, Distillée de pétrole CAS n° 64742-65-0 (7) Rhodoline 681F | Antimoussant | 0,20 |
| Hydroxyéthylcellulose CAS n° 9004-62-0 | Epaississant cellulosite | 0,30 |
| Dioxyde de titane CAS n° 13463-67-7 | Pigment | 10,00 |
| Carbonate de calcium précipité CAS n° 471-34-1 | Charge | 6,00 |
| Carbonate de calcium naturel CAS n° 1317-65-3 | Charge | 14,00 |
| Agalmatolyte CAS n° 12284-46-7 | Charge | 10,00 |
| Hydroxyde d'ammoniaque CAS n° 1336-21-6 | Alcalinisant | 0,20 |
| 1,2-benziso-3-thiazolinone CAS n° 2634-33-5 (8) | Biocide | 0,10 |
| Oxyde de polyéthylène uréthane hydrophobiquement modifié, non ionique (9) | Epaississant à faible cisaillement | 1,70 |
| Émulsion d'épaississant anionique hydrophobiquement modifié (10) | Epaississant à fort cisaillement | 0,40 |

| | | |
|---|---|---|
| (1) ABEX EP110 - tensioactif anionique - commercialisé par la société Rhodia Poliamida e Especialidades, Brésil. (2) SIPOMER COPS 1 - stabilisant - commercialisé par la société Rhodia Poliamida e Especialidades, Brésil. (3) IGEPAL CO-630 - tensioactif non ionique - commercialisé par la société Rhodia Poliamida e Especialidades, Brésil.; (4) TRIGONOX AW 70 - catalyseur - commercialisé par la société Akzo Nobel. (5) LUREDOX RC 99% - catalyseur - commercialisé par la société BASF. (6) Rhodoline 211 - polyélectrolyte dispersant, commercialisé par la société Rhodia North America, USA (7) RHODOLINE 681F - antimoussant, commercialisé par la société Rhodia North America, USA. (8) PROXEL GLX - Biocide, commercialisé par la société Avecia Group Pic. (9) Acrysol RM-5000 - additif rhéologique, commercialisé par la société Rohm and Haas. (10) Acrysol™ TT 935 - additif rhéologique, commercialisé par la société Rohm and Haas. | | |

Dans les Figures, on indique sous les références F5 et F6, qui sont formulations de peintures contenant un rapport de 18/82 en poids du système de résine vinyl acrylique selon le Tableau IV ci-dessus, et da base de formulation de Peinture mate selon le Tableau VI ci-dessus, contenant respectivement une addition de 2% en poids de Texanol, et une addition de 2% en poids de IIPG.

L'on procédera par la suite à la description des méthodes analytiques utilisées pour tester les systèmes de résine et les peintures décrites plus haut.

### Procédé pour évaluation de la résistance à l'abrasion

1. Sur une plaque en verre de 20x50 cm fixer une plaque de test Leneta P 121-10N (commercialisée par la société The Leneta Company, USA), après nettoyage du verre avec une lingette imbibée d'alcool ;
2. Nettoyer la plaque de test avec une lingette imbibée d'alcool ;
3. Placer un extenseur (film de 175 µm d'épaisseur) au centre de la plaque Leneta sur la partie supérieure de la plaque de test ;
4. Placer l'échantillon de référence depuis la gauche jusqu'au centre de l'extenseur ;
5. Placer l'échantillon à évaluer du côté droit de la plaque de test.
6. Tirer manuellement l'extenseur avec une vitesse de 3 à 5 secondes jusqu'à atteindre la partie inférieure de la plaque de test. Ce procédé devra être répété trois fois pour chaque échantillon ;
7. Laisser sécher l'échantillon appliqué en milieu climatisé (temp. 22 ± 2°C et humidité relative 55 ± 5 %) pendant 7 jours ;
8. Une fois cette période écoulée, fixer la plaque de test à évaluer à l'intérieur du plateau, sur la plaque en verre de l'appareil GAT (Gardner Abrasion Tester - fabriqué selon la norme ASTM D-2486), avec la partie en verre sablé tournée vers le haut ;
9. Peser 10 g de pâte abrasive (préparée selon la norme NBR 14940) sur la brosse et placer la brosse dans l'appareil. Ajouter 10 ml d'eau déminéralisée sur l'étendue de la plaque de test et débuter l'opération d'amorçage, après avoir mis à zéro le compteur de cycles et branché l'appareil ;
10. Un cycle est constitué à chaque aller-retour de la brosse et l'usure de la peinture est constaté lorsque la brosse enlève toute la peinture appliquée, d'une étendue à l'autre, laissant apparaître totalement le fond noir de la plaque Leneta sur une ligne continue ;
11. A chaque 400 cycles l'équipement s'arrête automatiquement. Enlever alors la brosse, sans la laver. Appliquer encore 10 g de pâte abrasive et 10ml d'eau déminéralisée sur le trajet de la brosse ;

Ce procédé devra être réalisé jusqu'à la fin de l'essai. Le comptage des cycles devra être arrêté dès que l'on constate le premier signe de jonction entre les usures de la peinture analysée.

### Procédé d' évaluation de la TMFF (température minimale de filmification)

Equipement utilisé : appareil Rhopoint MFFT - Bar .60, avec 6 plages de température entre-5°C à +60°C. Evaluation effectuée selon la norme ASTM D-2354 65T.
1. Soulever le couvercle en verre qui recouvre la plaque de chauffage de l'appareil ;
2. Passer sur la plaque de chauffage une couche uniforme de propylène glycol, à l'aide d'un pinceau ;
3. Découper un morceau de papier aluminium, le placer sur la plaque de ,chauffage avec la couche de propylène glycol, en le lissant bien pour lui donner un aspect uniforme et e faire bien adhérer sur la plaque ;
4. Nettoyer la surface du papier aluminium avec un papier imbibé d'éthanol, puis la sécher ;
5. Baisser le couvercle, brancher l'appareil et régler la température sur la plage appropriée, en ouvrant la soupape d'eau pour contrôler la température ;
6. Après stabilisation de la température, appliquer l'azote à un débit de 4 litres par minute à une pression de 4 bar, pour retirer l'humidité de la surface de la plaque ;
7. Soulever le couvercle et appliquer, à l'aide d'un extenseur pour film de 75 µm par 1,5 cm de largeur, au moins trois couches parallèles de l'échantillon à analyser ;
   Refermer le couvercle et, avec l'azote branché, attendre le séchage complet de la dispersion ;
8. Après séchage, vérifier à l'aide une spatule passe du point où il est cassant à celui où il est flexible et continu ;
9. Déplacer la règle de guidage l'appareil jusqu'à ce point et vérifier sur l'échelle de l'équipement la température correspondante, en °C.
10. Répéter cette opération sur les autres couches appliquées et prendre la moyenne arithmétique

### Procédé d'évaluation de la stabilité

1. Homogénéiser l'échantillon à l'aide d'une spatule ;
2. Ajouter l'échantillon à évaluer jusqu'à remplir environ 90% d'un flacon de 250 ml ;
3. Placer un film plastique sur l'embouchure du flacon et fermer avec le couvercle pour éviter la fuite de vapeurs ;
4. Garder le flacon en étuve à 60°C pendant 1 mois ;
5. Tous les 7 jours, retirer le flacon de l'étuve, attendre la stabilisation à la température ambiante et vérifier les altérations dans les propriétés :
   - couleur et odeur ;
   - séparation de phases, formation de liquide superficiel et/ou décantage
   - s'il n'y a pas de séparation de phases, mesurer la viscosité et le pH.

### Procédé pour mesurer le pH

1. Avec l'appareil pour mesurer le Ph branché et étalonné, insérez l'électrode du mesureur de pH directement sur l'échantillon.
2. Attendre la stabilisation de l'équipement durant 1 minute.
3. Faire la lecture du pH.

### Procédé pour mesurer la viscosité Brookfield

Equipement : viscosimètre Brookfield
1. Laisser un échantillon d'environ 400 ml dans un bain thermostatique à 25°C, pendant 2 heures. Une fois ce temps écoulé, homogénéiser l'échantillon à l'aide d'un bâton en verre et vérifier avec un thermomètre si l'échantillon est à 25°C ;
2. Transférer l'échantillon dans un béquer de 600 ml jusqu'à la marque de 400 ml.
3. Choisir la tige appropriée pour la lecture de la viscosité, telle que la lecture affichée sur le cadran de l'appareil se situe entre 20% et 80%
4. Fixer la tige sur l'appareil et la centraliser dans le flacon, ajuster la hauteur d'immersion par la marque de la tige;
5. Effectuer la lecture pendant une minute.

La valeur de la viscosité est exprimée en centipoises (cPs).

### Procédé pour mesurer la viscosité Krebs

Equipement utilisé : viscosimètre Stormer
1. Laisser un échantillon dans un bain thermostatique à 25°C, pendant 2 heures.
2. Une fois ce temps écoulé, homogénéiser l'échantillon à l'aide d'un bâton en verre et vérifier s'il est à 25°C.
3. Placer l'échantillon dans le viscosimètre et insérer la tige qui va effectuer la mesure jusqu'à la marque existant sur la tige, en baissant le levier de l'appareil.
4. Aussitôt que le levier est baissé, l'équipement commence à effectuer la mesure qui doit durer 1 minute, marquée au chronomètre.

### Procédé pour mesurer la brillance

Equipement utilisé - Brillancemètre Micro - TRI - gloss Gardner. Procédé conforme aux normes ASTM D 523 et ASTM D2457.
1. Sur une plaque en verre de 20x50 cm fixer une plaque de test Leneta P 121-10N (commercialisée par la société The Leneta Company, USA), après nettoyage du verre avec une lingette imbibée d'alcool ;
2. Nettoyer la plaque de test avec une lingette imbibée d'alcool ;
3. Placer un extenseur (de 175 µm d'épaisseur de film) au centre de la plaque Leneta sur la partie supérieure de la plaque de test ;
4. Placer la peinture dans l'extenseur allant de gauche vers la droite ;
5. Tirer l'extenseur manuellement avec une vitesse de 3 à 5 secondes jusqu'à la partie inférieure de la plaque de test ;
6. Laisser sécher l'échantillon appliqué en milieu climatisé (temp. 22 ± 2°C et humidité relative 55 ± 5 %) pendant 7 jours ;
7. Brancher appareil de brillance, régler l'angle à 60°, et ajuster pour faire vingt lectures ;
8. Faire les mesures en divers points du film pour que la moyenne finale soit une valeur fiable ;
9. Considérer la valeur do brillance comme étant la moyenne des mesures.

### FIGURES :

Les Figures comportent les informations suivantes :

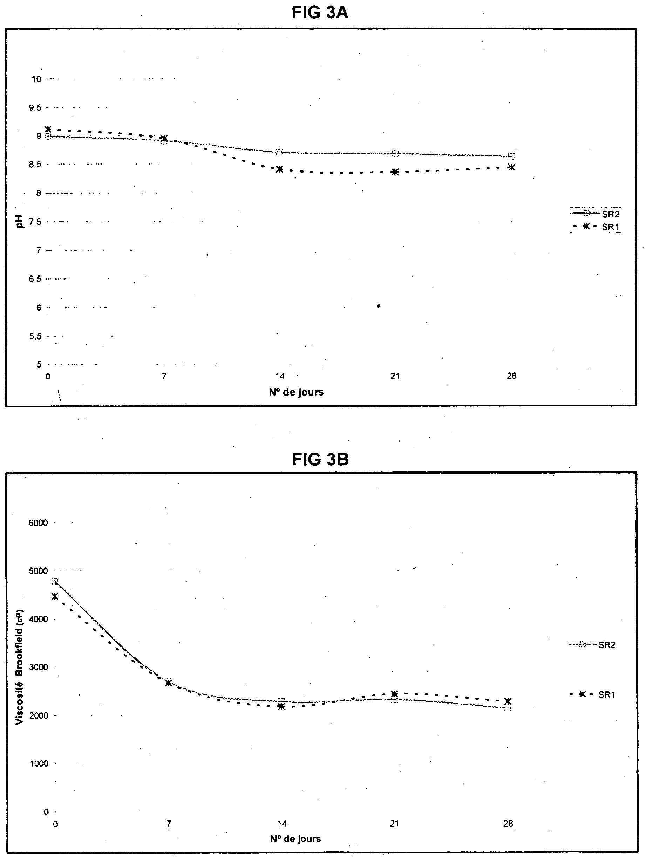

- FIG. 3A - résine acrylique pure - stabilité de pH
- FIG. 3B - Résine acrylique pure - Stabilité de viscosité Brookfield

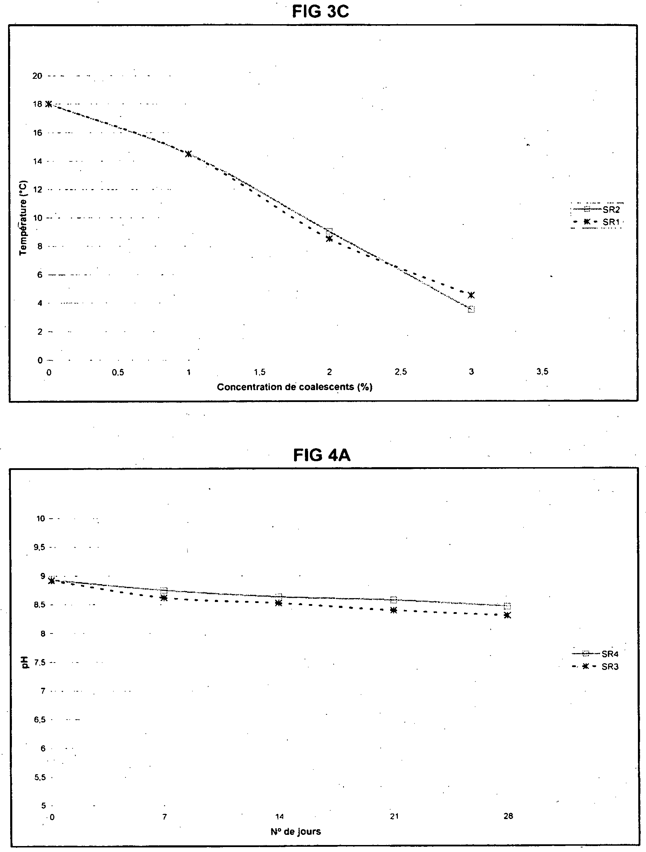

- FIG. 3C - Résine acrylique pure - variation da TMFF en fonction de la concentration de coalescents
- FIG. 4A - Résine styrène acrylique - Stabilité de pH

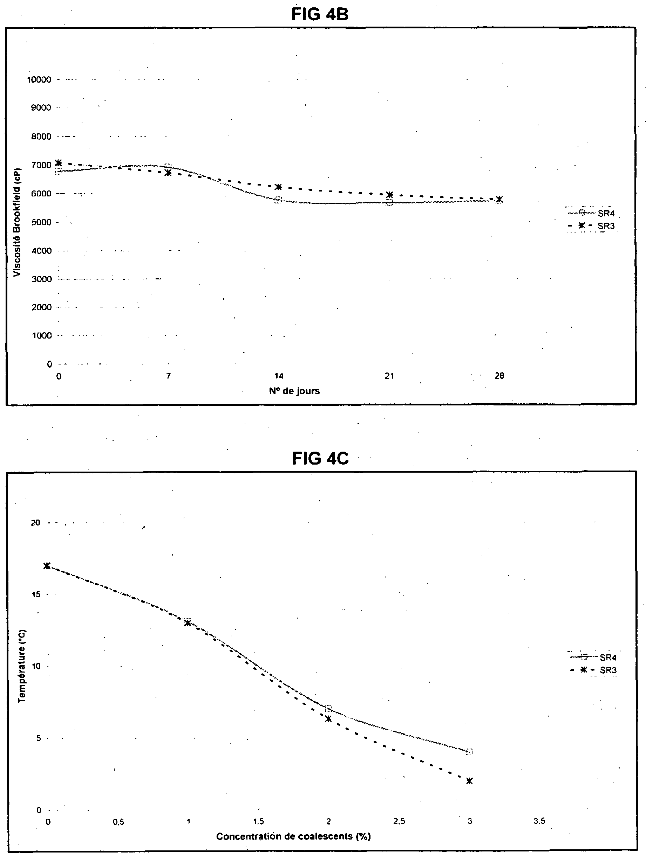

- FIG. 4B - Résine styrène acrylique - Stabilité viscosité Brookfield
- FIG. 4C - Résine styrène acrylique - Variation da TMFF en fonction de la concentration de coalescents

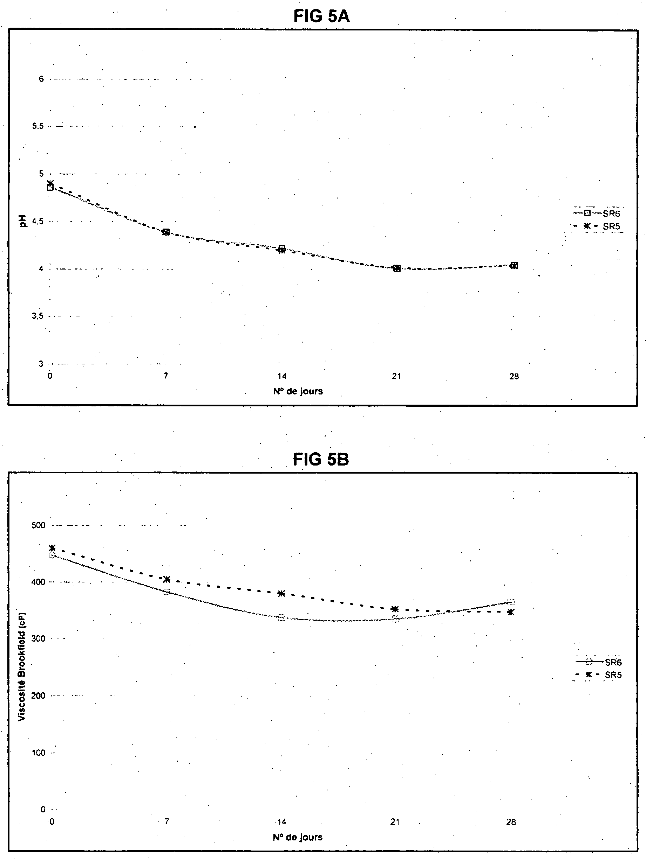

- FIG. 5A - Résine vinyl acrylique - Stabilité de pH
- FIG. 5B - Résine vinyl acrylique - Stabilité de viscosité Brookfield

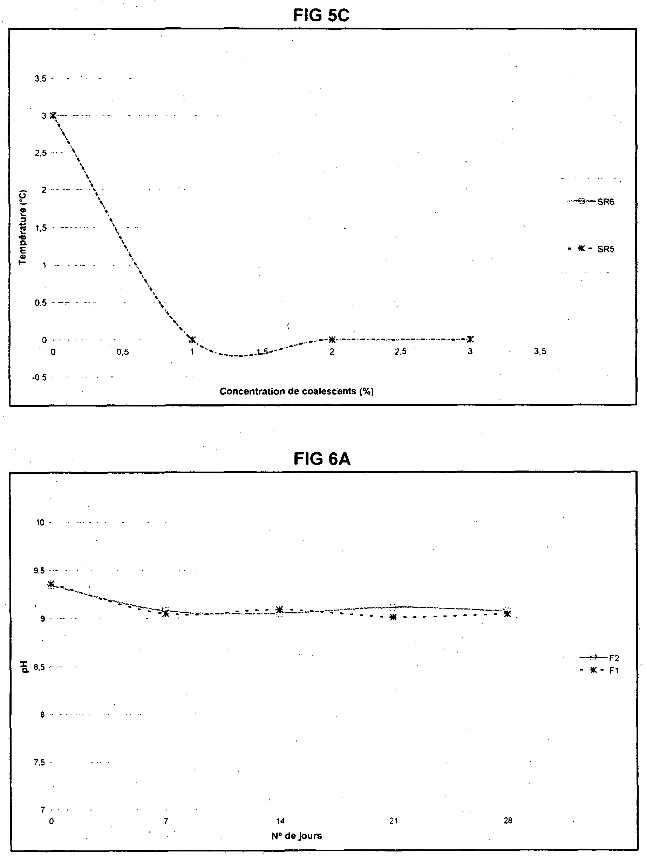

- FIG. 5C - Résine vinyl acrylique - variation da TMFF en fonction de la concentration de coalescents
- FIG. 6A - Peinture acrylique pure - Stabilité de pH

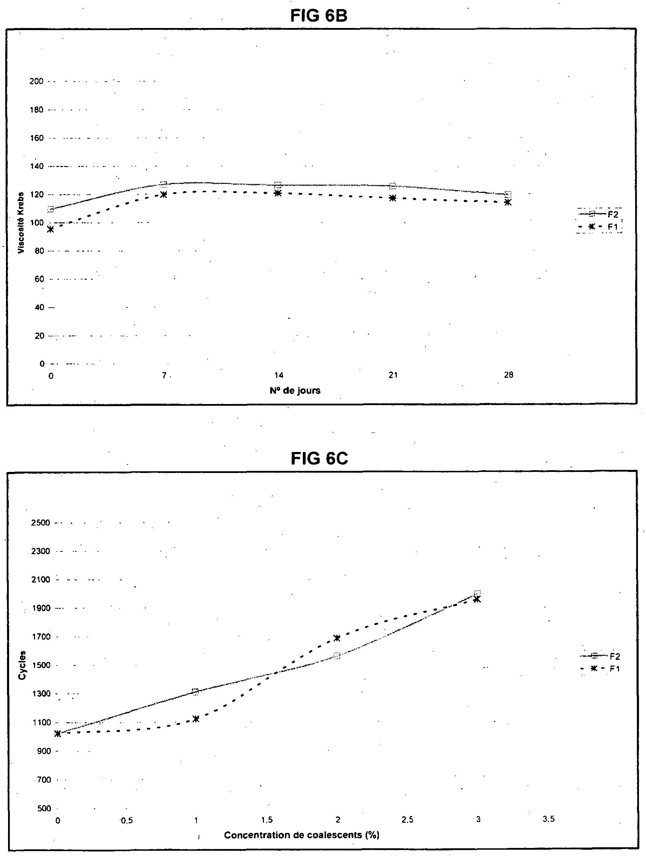

- FIG. 6B - Peinture acrylique pure - Stabilité de viscosité Krebs
- FIG. 6C - Peinture acrylique pure - Résistance à l'abrasion (cycles)

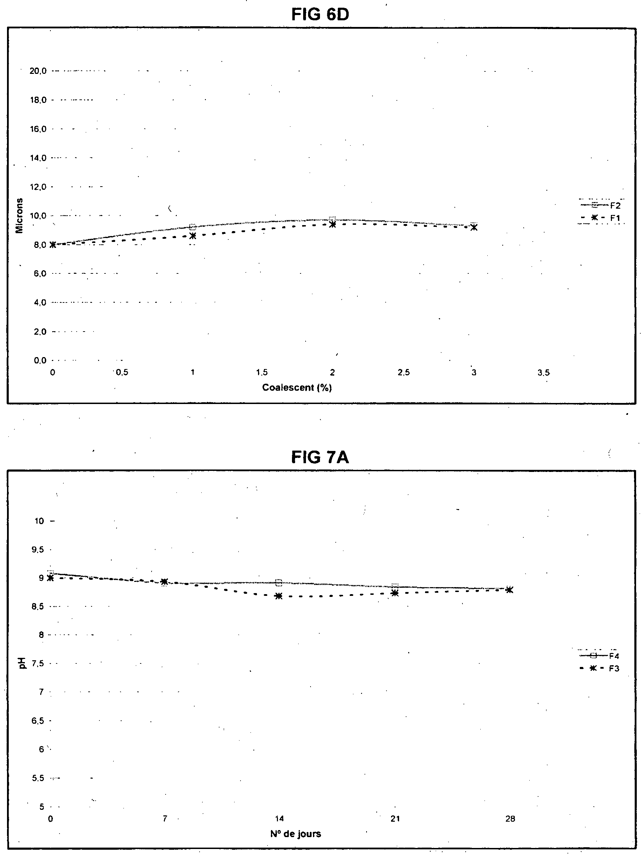

- FIG. 6D - Peinture acrylique pure - variation de brillance à 60°
- FIG. 7A - Peinture styrène acrylique Stabilité de pH

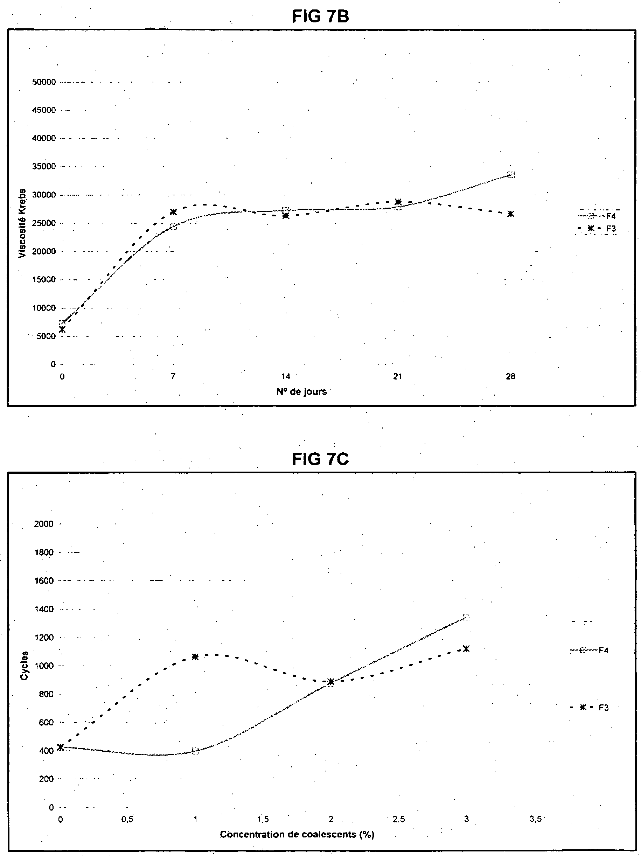

- FIG. 7B - Peinture styrène acrylique - Stabilité viscosité Krebs (KU)
- FIG. 7C - Peinture styrène acrylique - Résistance à l'abrasion (cycles)

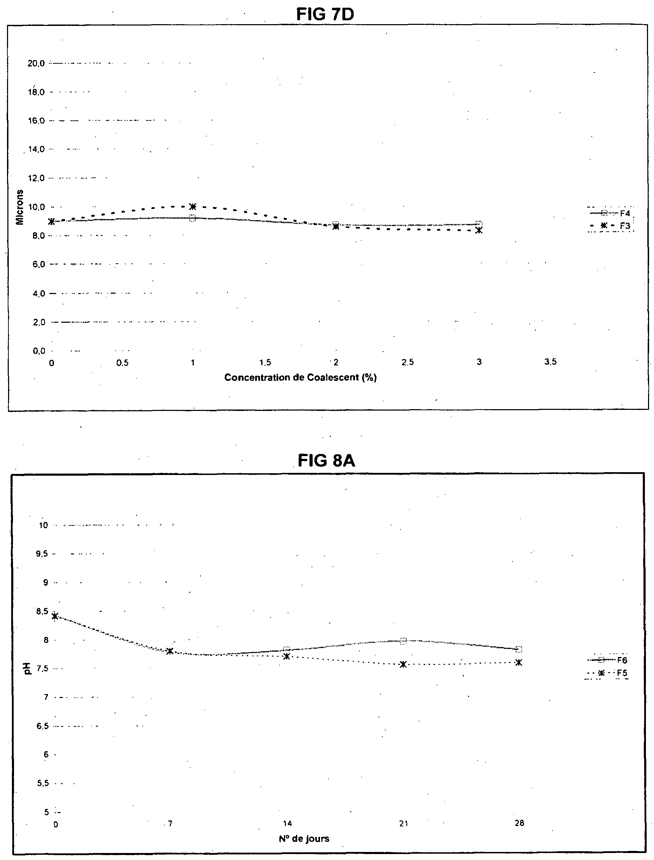

- FIG. 7D - Peinture styrène acrylique - Variation de brillance à 60°
- FIG. 8A - Peinture vinyl acrylique - stabilité de pH

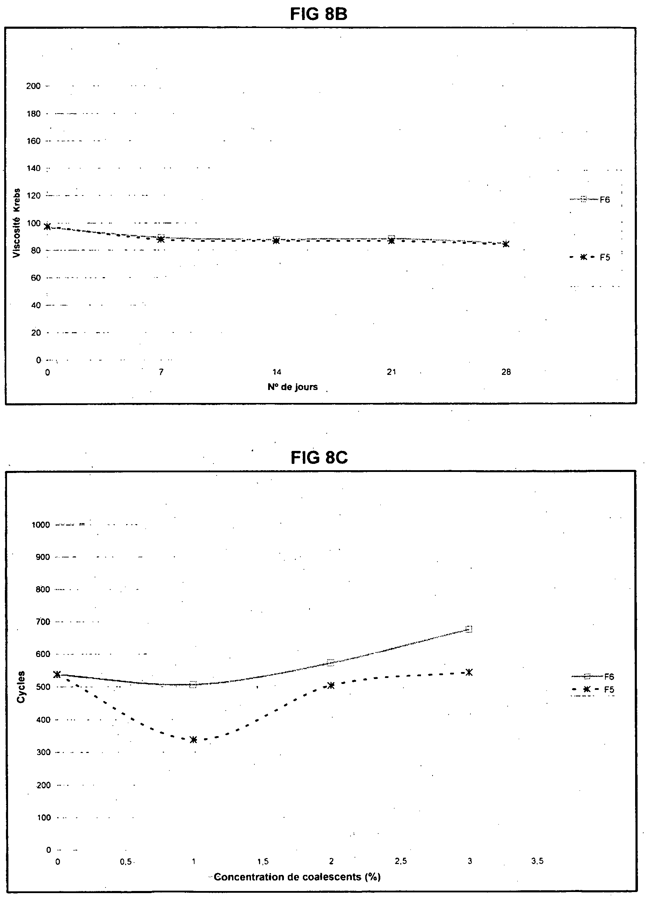

- FIG. 8B - Peinture vinyl acrylique - Stabilité de viscosité Krebs
- FIG. 8C - Peinture vinyl acrylique - Résistance à l'abrasion (cycles)

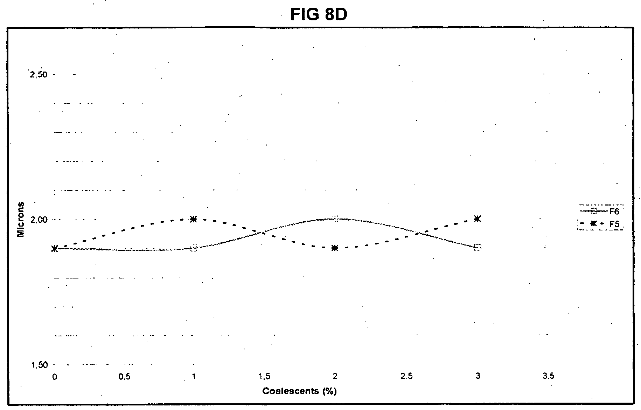

- FIG. 8D - Peinture vinyl acrylique - Variation de brillance à 60°

### CONCLUSIONS :

Aussi bien dans les systèmes de résines, auxquels ont été ajoutés les agent de coalescence qui comparent un agent connu de l'état de la technique, avec un agent selon l'objet de la présente invention, que dans les formulations de peintures contenant ces systèmes de résines, et des quantités additionnelles de ces coalescents, l'on constate que les dérivés de dioxolane selon la présente invention présentent des propriétés équivalentes et totalement compatibles avec leur utilisation en tant que coalescent en peintures architecturales.

Il est entendu que, à l'aide des informations et des exemples ici fournis, l'homme du métier peut réaliser des variations de la présente invention qui ne sont pas expressément prévues ou revendiquées, mais qui, malgré la forme différente, remplissent une fonction similaire pour atteindre des résultats du même ordre de grandeur, étant donc comprises dans le cadre de la protection indiqué dans les revendications ci-jointes.

## Revendications

1. Utilisation comme agent filmogène dans des systèmes de peintures pour revêtement de dérivés de dioxolane **caractérisée en ce que** le dérivé de dioxolane est conforme à la formule I suivante : 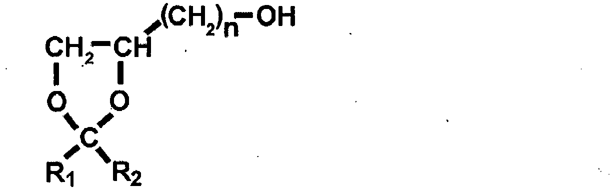 dans laquelle R1 et R2 identiques ou différents, représentent un atome d'hydrogène, un groupe ou radical choisi dans le groupe comprenant les radicaux alkyle, alkényle, phényle, et n est un nombre entier égal à 1, 2, 3, 4 ou 5.

2. Utilisation selon la revendication 1, **caractérisée en ce que** R1 et R2 sont des radicaux méthyle, éthyle, n-propyle, isopropyle ou isobutyle.

3. Utilisation selon la revendication 1 où 2, **caractérisée en ce que** n est égal à 1 ou 2.

4. Utilisation selon la revendication 1, **caractérisée en ce que** le dérivé de dioxolane est le 2,2-diméthyl-1,3-dioxolane- 4- méthanol.

5. Utilisation selon la revendication 1, **caractérisée en ce que** le dérivé de dioxolane est le 2,2-diisobutyle-1,3-dioxolane- 4- méthanol.

6. Formulation pour système de revêtement **caractérisée en ce qu'**elle comprend comme agent filmogène au moins un dérivé de dioxolane, **en ce que** le dérivé de dioxolane est conforme à la formule (I) suivante : 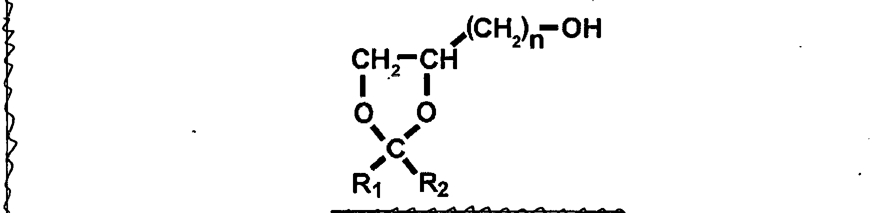 dans laquelle R1 et R2 identiques ou différents, représentent un atome d'hydrogène, un groupe ou radical choisi dans le groupe comprenant les radicaux alkyle, alkényle, phényle, et n est un nombre entier égal à 1, 2, 3, 4 ou 5 et **en ce que** ladite formulation est à base de nitrocellulose, polyester, d'acétate butyrate de cellulose (CAB), d'un système polyuréthanique, d'époxy, d'acrylique, mélaminique, ou phénolique.

7. Formulation selon la revendication 6, **caractérisé en ce que** R1 et R2 sont des radicaux méthyle, éthyle, n-propyle, isopropyle ou isobutyle.

8. Formulation selon la revendication 6 ou 7, **caractérisée en ce que** n est égal à 1 ou 2.

9. Formulation selon l'une des revendications 6 à 8, **caractérisée en ce que** le dérivé de dioxolane est le 2,2-diméthyl-1,3-dioxolane- 4- méthanol.

10. Formulation selon l'une des revendications 6 à 8, **caractérisée en ce que** le dérivé de dioxolane est le 2,2-diisobutyle-1,3-dioxolane- 4- méthanol.

11. Formulation selon l'une des revendications 6 à 10, **caractérisée en ce qu'**elle est à base aqueuse.

12. Formulation selon l'une des revendications 6 à 10, **caractérisée en ce qu'**elle est à base solvant.

## Patentansprüche

1. Verwendung von Dioxolanderivaten als Filmbildner in Anstrichstoffsystemen zum Beschichten, **dadurch gekennzeichnet, dass** das Dioxolanderivat der folgenden Formel I entspricht: 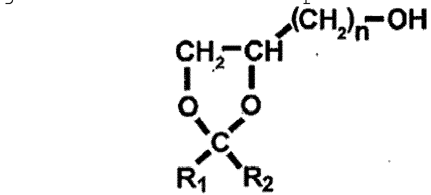 wobei R1 und R2 gleich oder verschieden sind und für ein Wasserstoffatom oder eine Gruppe oder einen Rest aus der Gruppe umfassend Alkyl-, Alkenyl- und Phenylreste stehen und n eine ganze Zahl mit einem Wert von 1, 2, 3, 4 oder 5 ist.

2. Verwendung nach Anspruch 1, **dadurch gekennzeichnet, dass** es sich bei R1 und R2 um Methyl-, Ethyl-, n-Propyl-, Isopropyl- oder Isobutylreste handelt.

3. Verwendung nach Anspruch 1 oder 2, **dadurch gekennzeichnet, dass** n gleich 1 oder 2 ist.

4. Verwendung nach Anspruch 1, **dadurch gekennzeichnet, dass** es sich bei dem Dioxolanderivat um 2,2-Dimethyl-1,3-dioxolan-4-methanol handelt.

5. Verwendung nach Anspruch 1, **dadurch gekennzeichnet, dass** es sich bei dem Dioxolanderivat um 2,2-Diisobutyl-1,3-dioxolan-4-methanol handelt.

6. Beschichtungssystemformulierung, **dadurch gekennzeichnet, dass** sie als Filmbildner mindestens ein Dioxolanderivat umfasst und dass das Dioxolanderivat der folgenden Formel I entspricht: 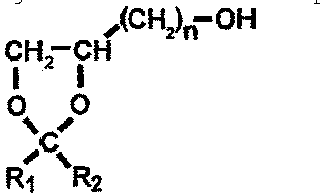 wobei R1 und R2 gleich oder verschieden sind und für ein Wasserstoffatom oder eine Gruppe oder einen Rest aus der Gruppe umfassend Alkyl-, Alkenyl- und Phenylreste stehen und n eine ganze Zahl mit einem Wert von 1, 2, 3, 4 oder 5 ist, und dass die Formulierung auf Nitrocellulose, Polyester oder Celluloseacetatbutyrat (CAB) oder einem Polyurethan-, Epoxid-, Acryl-, Melamin- oder Phenolsystem beruht.

7. Formulierung nach Anspruch 6, **dadurch gekennzeichnet, dass** es sich bei R1 und R2 um Methyl-, Ethyl-, n-Propyl-, Isopropyl- oder Isobutylreste handelt.

8. Formulierung nach Anspruch 6 oder 7, **dadurch gekennzeichnet, dass** n gleich 1 oder 2 ist.

9. Formulierung nach einem der Ansprüche 6 bis 8, **dadurch gekennzeichnet, dass** es sich bei dem Dioxolanderivat um 2,2-Dimethyl-1,3-dioxolan-4-methanol handelt.

10. Formulierung nach einem der Ansprüche 6 bis 8, **dadurch gekennzeichnet, dass** es sich bei dem Dioxolanderivat um 2,2-Diisobutyl-1,3-dioxolan-4-methanol handelt.

11. Formulierung nach einem der Ansprüche 6 bis 10, **dadurch gekennzeichnet, dass** sie wasserbasiert ist.

12. Formulierung nach einem der Ansprüche 6 bis 10, **dadurch gekennzeichnet, dass** sie lösungsmittelbasiert ist.

## Claims

1. Use of dioxolane derivatives as a film former in paint systems for coating, **characterized in that** the dioxolane derivative is in accordance with formula I below: 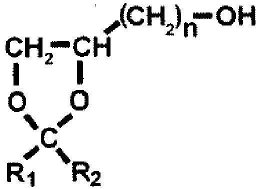 in which R1 and R2, which are identical or different, represent a hydrogen atom or a group or radical selected from the group comprising the radicals alkyl, alkenyl, and phenyl, and n is an integer 1, 2, 3, 4 or 5.

2. Use according to Claim 1, **characterized in that** R1 and R2 are methyl, ethyl, n-propyl, isopropyl or isobutyl radicals.

3. Use according to Claim 1 or 2, **characterized in that** n is 1 or 2.

4. Use according to Claim 1, **characterized in that** the dioxolane derivative is 2,2-dimethyl-1,3-dioxolane-4-methanol.

5. Use according to Claim 1, **characterized in that** the dioxolane derivative is 2,2-diisobutyl-1,3-dioxolane-4-methanol.

6. Coating system formulation **characterized in that** it comprises as film former at least one dioxolane derivative, **in that** the dioxolane derivative is in accordance with formula (I) below: 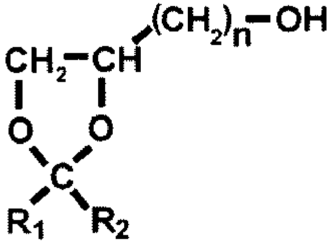 in which R1 and R2, which are identical or different, represent a hydrogen atom or a group or radical selected from the group comprising the radicals alkyl, alkenyl, and phenyl, and n is an integer 1, 2, 3, 4 or 5 and **in that** said formulation is based on nitrocellulose, polyester or cellulose acetate butyrate (CAB) or on a polyurethane, epoxy, acrylic, melamine or phenolic system.

7. Formulation according to Claim 6, **characterized in that** R1 and R2 are methyl, ethyl, n-propyl, isopropyl or isobutyl radicals.

8. Formulation according to Claim 6 or 7, **characterized in that** n is 1 or 2.

9. Formulation according to any of Claims 6 to 8, **characterized in that** the dioxolane derivative is 2,2-dimethyl-1,3-dioxolane-4-methanol.

10. Formulation according to any of Claims 6 to 8, **characterized in that** the dioxolane derivative is 2,2-diisobutyl-1,3-dioxolane-4-methanol.

11. Formulation according to any of Claims 6 to 10, **characterized in that** it is water-based.

12. Formulation according to any of Claims 6 to 10, **characterized in that** it is solvent-based.
